# EUROPEAN PATENT SPECIFICATION

(11) **EP 2 438 284 B1**
(45) Date of publication and mention of the grant of the patent: **31.08.2016**
(21) Application number: 09786051.4
(22) Date of filing: 02.06.2009
(51) Int. Cl.: F02M 26/00, F02D 41/06, F02D 41/00, F02D 41/02, F02B 37/00, F02D 13/02

(54) **METHOD FOR OPERATING AN ENGINE ARRANGEMENT AT STARTUP**
VERFAHREN FÜR DEN BETRIEB EINER MOTORANORDNUNG
PROCÉDÉ DE FONCTIONNEMENT D'UN AGENCEMENT DE MOTEUR

(43) Date of publication of application: 11.04.2012
(73) Proprietor: Volvo Lastvagnar AB, 405 08 Göteborg (SE)
(72) Inventor: AUFFRET, Nicolas, F-51510 Compertrix (FR); LE FORESTIER, Romain, F-69002 Lyon (FR)
(74) Representative: Faucheux, Jérôme
(86) International application number: PCT/IB2009/006331
(87) International publication number: WO 2010/140020

(56) References cited:
- EP-A1- 0 953 744
- EP-A2- 1 283 336
- EP-A2- 1 486 667
- EP-A2- 1 726 792
- WO-A1-03/069148
- DE-A1- 2 728 259
- DE-A1- 4 445 779
- DE-A1-102006 041 231
- FR-A1- 2 872 860
- US-A1- 2002 129 798
- US-A1- 2005 016 486
- US-A1- 2006 016 421
- US-A1- 2006 266 317

## Description

### Technical field

The invention relates to the field of methods for operating an engine arrangement comprising a four stroke internal combustion engine.

### Background art

Four stroke internal combustion engines (ICEs) are well known. In a reciprocating piston design, they have at least one cylinder or several cylinders. In each cylinder, a piston, which is connected to a crankshaft, is displaced between a top dead center position and a bottom dead center position, thereby defining in the cylinder a variable volume combustion chamber. When such an engine is operating according to a four strokes cycle, the four strokes are usually theoretically defined as the periods of times between two immediately consecutive dead center positions of the piston. These strokes are the intake stroke, the compression stroke, the power stroke, and the exhaust stroke. Such engines also comprise at least one controlled intake port and at least one controlled exhaust port to control communication of the combustion chamber respectively with an intake line and with an exhaust line of the engine arrangement. The opening and closing of the intake and exhaust ports are usually performed through a corresponding poppet valve. The intake port is controlled to achieve a main open phase mainly during the intake stroke and the exhaust port is controlled to achieve a main open phase mainly during the exhaust stroke. It is of course well known that these main intake and exhaust opening phases may start before or after the theoretical beginning and/or end before or after the theoretical end of the corresponding stroke.

It is also known that either the intake port or the exhaust port can be controlled to achieve auxiliary opening phases to modify the basic operation of the engine. For example, engine braking can be enhanced by providing that the exhaust port is opened at the end of the compression stroke. Also, it is known to control a brief opening of the intake port during the exhaust stroke, or at least an early opening of the intake port at the end of the exhaust stroke, to achieve so-called internal exhaust gas recirculation.

Many ways of optimizing four strokes internal combustion engines have been suggested already to enhance their performance in view of often theoretically opposing requisites, and in particular in view of minimizing consumption of fuel and production of harmful emissions. One area of interest for engine arrangement designers is the temperature management of the engine. Indeed, the engine cannot always operate at its optimum temperature. One critical aspect is the operation of the engine at start, before it has reached its optimal temperature. It is then desirable to attain as quickly as possible that optimal temperature. Another critical aspect has also appeared more recently with the presence in the engine arrangement of various exhaust after-treatment systems such as three-way catalysts, particle filters or selective catalytic reduction systems. Such systems often require that the exhaust gases passing through them are comprised within a well defined temperature range, either for their optimum functioning or, in the case of particulate filters, for their regeneration. In such cases, it is sometimes critical to enhance the temperature of the exhaust gases.

Another way to optimize the functioning of four stroke ICEs is to achieve exhaust gas recirculation (EGR). Depending on how and when EGR is performed, various results can be achieved, but a very frequent reason to use of EGR, especially in Diesel engines, is to lower the temperature of the combustion process in order to limit the production of nitrogen oxides (NOx).

FR 2 872 860 A1 discloses a method of operating an internal combustion engine, wherein an auxiliary open phase of an intake valve starts and ends at the end of the exhaust stroke, warming up consequently the intake system.

US 2006/0266317 A1 discloses a method of operating an internal combustion engine, wherein an auxiliary open phase of an intake valve starts at approximately 110 degrees of crankshaft revolution after the piston top dead center initiating the power stroke, in order to reduce unburned HC emissions.

Document US-6.347.619 discloses a way to achieve EGR in a wide variety of engine operating conditions. The aim of the system disclosed in this document is to capture exhaust gases at a relatively high pressure. The system disclosed provides EGR in a turbocharged diesel engine by adding a separate EGR manifold and a secondary exhaust valve for each combustion chamber that permits flow of exhaust gases from the combustion chamber to the EGR manifold. The secondary exhaust valve is opened during the expansion stroke of the engine cycle, after the combustion process has been completed, while the pressure in the combustion chamber is still greater than the pressure in the intake manifold. Therefore, this system requires an additional manifold, an additional set of ports and an additional system for controlling the additional ports, and would therefore be quite costly.

An object of the invention is to provide a new method of operating a four stroke ICE arrangement giving the possibility, at a minimal cost, to ensure an enhanced thermal management of the engine and of the exhaust gases.

### Summary

The invention therefore provides for a method for operating an engine arrangement comprising a four strokes internal combustion engine, characterized in that said method includes the routine of controlling the intake port to achieve an auxiliary open phase during the power stroke comprising a combustion process, the auxiliary open phase starts and ends during the power stroke, wherein the auxiliary open phase starts between 30 and 70 degrees of crankshaft revolution after the top dead center position initiating the power stroke.

### Description of figures

Figure 1 is a schematic view of the main components of an engine arrangement which can be operated with the method according to the invention.
Figure 2 is a schematic diagram showing the control of the intake port in an exemplary method of operating an engine arrangement according to the invention, and the corresponding mass flow rate through the intake port.
Figure 3 is a schematic diagram showing the difference in temperature in the cylinder which results from the use of the method according to the invention.

### Detailed description

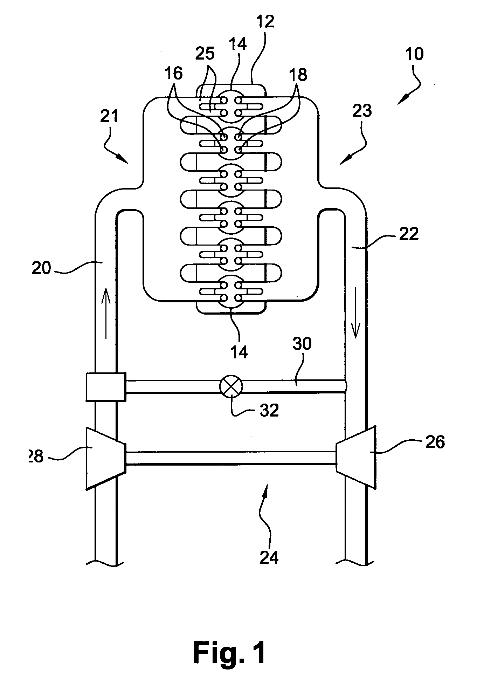

On Figure 1 is shown an engine arrangement 10 which comprises a reciprocating piston internal combustion engine 12. Engine 12 comprises at least one cylinder 14, and, in the example shown, comprises in fact six cylinders in an in-line configuration. Each cylinder comprises a piston (not represented) which is connected to a rotating crankshaft (not represented) of the engine through a connecting rod (not represented). Following the rotation of the crankshaft, the piston slides within the cylinder 14 between a top dead center position and bottom dead center position, thereby defining in the cylinder a variable volume combustion chamber. The engine 12 is operated according to a four strokes cycle. The four strokes are usually theoretically defined as the periods of times between two immediately consecutive dead center positions of the piston. These strokes are the intake stroke, the compression stroke, the power stroke, and the exhaust stroke. Each cylinder 14 is equipped with at least one intake port 16 and at least one exhaust port 18. As in many modern engines, the engine on Figure 1 has two intake ports 16 and two exhaust ports 18 per cylinder 14. Each port 16, 18 is controlled to permit or inhibit fluid communication of the combustion chamber with an intake line 20 or with an exhaust line 22 of the engine arrangement 10. Conventionally each port can be controlled by a poppet valve, or any other suitable device. As will be seen hereunder, the engine is equipped with means for controlling the ports opening phases according to the engine operating cycle. Such control means can comprise a camshaft which mechanically controls poppet valves, but such means can alternatively comprise camless means such as electric-magnetic or electro-hydraulic valve actuators. In any case, the control means are designed so that the intake port is controlled to achieve at least a main open phase, mainly during the intake stroke, and so that the exhaust port is controlled to achieve at least a main open phase, mainly during the exhaust stroke.

In the case of a multi-cylinder engine, the intake line is preferably equipped with an intake manifold 21 through which it is connected to each of the intake ports 16. The intake manifold 21 has preferably separate intake ducts for each individual intake port 16, or at least preferably an individual intake duct 25 for each cylinder. Similarly, the exhaust line is preferably equipped with an exhaust manifold 23 having individual exhaust ducts for each exhaust port or at least for each cylinder.

In the example shown, the engine 12 is a turbocharged engine which comprises a turbo compressor 24 having its turbine 26 located on the exhaust line 22 and its compressor 28 located on the intake line 20. Also, the engine arrangement may be equipped, as represented on figure 1, with an exhaust gas recirculation system comprising for example an EGR conduit 30 having its inlet connected to the exhaust line 22 upstream of the turbine 26 and its outlets connected to the intake line 20 downstream of the compressor 28, and an EGR valve 32 which controls the flow of exhaust gases which can be circulated through the conduit 30 from the exhaust line to the intake line. The EGR system can comprise a cooling system to remove heat from the gases circulating in the conduit 30.

The engine 12 is for example a compression ignition engine, known as a Diesel engine, but the invention could also be carried out with a spark ignited engine. Also, the engine 12 may be of the direct injection type, where fuel is injected directly in the cylinder. In such a case, only air is admitted through the intake line into the cylinders, but the invention could also be carried out with an engine of the indirect injection type where the injection is performed for example in the intake line or in a pre-combustion chamber.

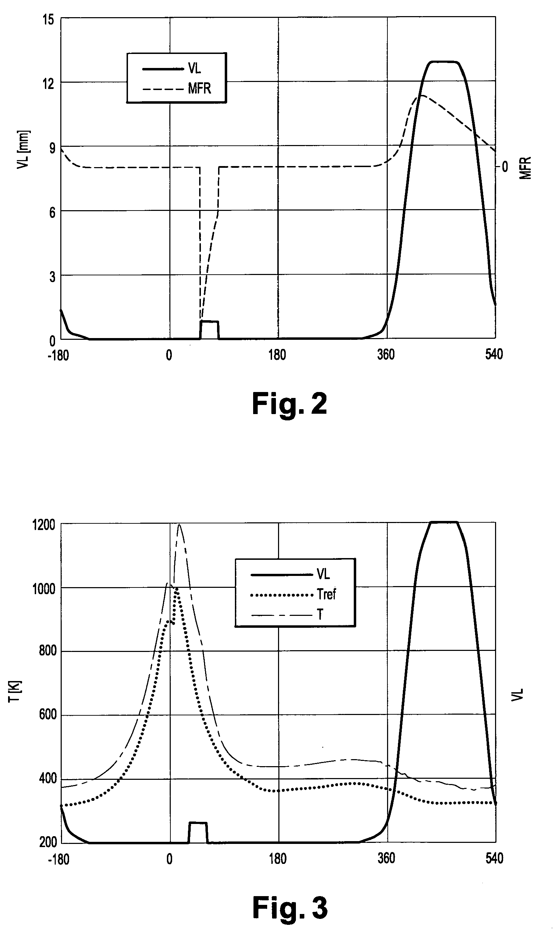

On Figure 2 is shown a graph where it is represented how at least one intake port of the engine is controlled in a method according to the invention. On Figure 2 can be seen curves VL representing the intake port control, such as the valve lift, and MFR representing the mass flow rate through the intake port, expressed as a function of or the crank rotation angle, where the top dead center position of the piston initiating the power stroke is given the value 0. As can be seen on the diagram, the intake port is controlled to achieve a main open phase which occurs mainly during the intake stroke, said stroke occurring between 360 to 540 degrees of crankshaft revolution. In a Diesel direct injection engine, this main open phase permits a certain quantity of gas mixture to be admitted in the combustion chamber from the intake line. This gas mixture is in most cases mainly composed of fresh air, but as will be seen hereunder, it may also comprise re-circulated exhaust gases. It can be seen that, during the main open phase of the intake port, the curb representing the mass flow rate of gases going through the intake port is on the positive side, which signals indeed that the gases flow from the intake line to the combustion chamber.

According to the invention, the method additionally includes the routine of controlling the intake port to achieve an auxiliary open phase during the power stroke, said stroke occurring between 0 to 180 degrees of crankshaft revolution. According to the invention, the auxiliary open phase is controlled to start after the end of the combustion process. In most engine operating conditions, at least for a diesel direct injection engine, the auxiliary open phase starts between 30 and 70 degrees of crankshaft revolution after the top dead center position initiating the power stroke. In the example shown, it starts at approximately 50 degrees of crankshaft revolution after the top dead center position initiating the power stroke. Despite being started after the end of the combustion process, one can therefore note that the auxiliary open phase starts quite early in the power stroke, before the piston has gone halfway down to its bottom dead center position. At that point in time, the pressure within the cylinder is still quite high, typically more than 10 bars, and in some cases superior to 50 bars, which is much higher than the pressure in the intake line, even in the case of a turbocharged engine. As a consequence, the opening of the intake port results in a flow of gases from the cylinder to the intake line, as evidenced by the negative values of the mass flow rate through the intake port represented on Figure 2. The gases which flow out of the cylinder through the intake port are those resulting from the prior combustion process and are therefore comparable in their composition to exhaust gases which would conventionally be expelled from the combustion chamber to the exhaust line during the exhaust stroke.

Nevertheless, at that point in time corresponding to the start of auxiliary open phase of the intake valve, the temperature of the gases in the combustion chamber are still very high, especially if compared to the temperature of exhaust gases which are expelled to the exhaust line in the exhaust strokes. One reason for this is that these gases have only undergone a very partial expansion, because the piston has yet only traveled less than 20 to 40 % of its displacement towards the bottom dead center, and therefore they have undergone only a very partial corresponding temperature drop. Another reason is that, during this very short period of time between the end of the combustion and the start of the auxiliary open phase, very little heat has been transferred from the gases to the cylinder parts.

As a result, the gases which are expelled to the intake line are at a very high temperature. Such gases can be up to 150°C hotter than exhaust gases expelled at the end of the exhaust stroke.

Of course, opening of one of the ports of the cylinder so early in the power stroke is detrimental to the amount of work which can be retrieved by the piston, which has adverse consequences on the engine output and on its efficiency.

Therefore, the auxiliary open phase of the intake valve should be short in time. The duration of the auxiliary open phase is preferably within 15 to 50 degrees. In other words, the auxiliary open phase preferably ends between 50 and 120 degrees of crankshaft revolution after the top dead center position initiating the power stroke. In the example shown on Figure 2 the duration of the auxiliary open phase is of approximately 30 degrees of crankshaft rotation, so that it ends at approximately 80 degrees of crankshaft rotation after the top dead center in the power stroke. In any case, the end of the auxiliary open phase will occur before the end of the power stroke, i.e. before the piston reaches the bottom dead center position. In the example shown, the auxiliary open phase is entirely contained within the first half of the power stroke.

Also, it can be noticed on Figure 2 that the degree of opening of the intake port during the auxiliary open phase, as represented for example by the valve lift in the case of a poppet valve, can be much smaller than the degree of opening of the intake port during the main open phase. Also, in the case of an engine having several intake ports, not all the ports of a given cylinder, and possibly only one of them, are opened during an auxiliary open phase, to limit the overall degree of opening of the intake ports during said auxiliary open phase. Nevertheless, that port which is opened for performing an auxiliary open phase can also be opened to perform a main open phase, so that it is not a port dedicated to said auxiliary open phase.

As a result of this auxiliary opening phase, a certain quantity of combustion products is expelled directly to the intake line. More particularly, in the configuration of the engine arrangement of Figure 1, the combustion products are stored in the intake manifold, and more specifically in the duct or ducts which correspond to the intake port(s) which have been controlled to achieve such an auxiliary open phase. Those combustion products can be qualified as direct high temperature EGR gases, as opposed to indirect EGR gases which are typically re-circulated through the conduit 30.

It is to be mentioned that, although not represented on the example of Figure 1, the intake manifold could be equipped with a valve system for isolating the intake ducts corresponding to different cylinders. Such valve system can comprise one way check-valves for each duct, so that combustion products expelled from one cylinder to the intake line during an auxiliary open phase can not reverse flow further in the intake line beyond those valves. Thereby, the combustion products would be surely confined to the intake ducts corresponding to that cylinder.

In any case, the combustion products which have been expelled to the intake line, the so-called direct high temperature EGR gases, are for the most part re-admitted in the cylinder at the following main open phase of the intake port(s), together with fresh air. As a result, the gases which are admitted in the cylinder for the next combustion process are a mixture of fresh air and of combustion products which have been expelled to the intake line directly through the intake port in the auxiliary open phase. The temperature of such a mixture is of course higher than the temperature of the fresh air typically provided through the intake line. The increase of temperature is of course dependent on the proportion between the fresh air and the combustion products which are present in the mixture. This proportion can be varied by varying the duration of the auxiliary open phase of the intake valve, and/or by varying the degree of opening of the intake port.

Of course, during this following main open phase of the intake port(s), it could be provided that indirect EGR gases, which have been re-circulated through the EGR conduit 30, are also admitted in the cylinder, together with some fresh air and with direct high temperature EGR gases. Such an option would enable to adjust the temperature of the mixture for a given ratio of EGR gases compared to fresh air.

When the routine of having an auxiliary open phase of the intake valve is carried out for a cylinder during a certain number of consecutive cycles of the cylinder, it can be seen on Figure 3 that the temperature inside the cylinder is expected to be higher than the temperature during a conventional cycle. On Figure 3 can be seen curves VL representing the intake port control, Tref representing the reference temperature inside the cylinder without use of the auxiliary open phase routine, and T representing the temperature in the cylinder when such routine is implemented, expressed as a function of or the crank rotation angle, where the top dead center position of the piston initiating the power stroke is given the value 0. This increased temperature of the gases inside the cylinder will inevitably result in a higher heat transfer towards the cylinder parts, and therefore a higher and quicker temperature increase of the global engine temperature. This will also result in a higher temperature of the exhaust gases which are expelled to the exhaust line during the exhaust stroke. Computer simulations have shown that, upon exit of the cylinder, exhaust gases can have a temperature increase of more than 100°C when the auxiliary open phase is implemented, compared to when it is not implemented.

Of course, as stated above, practicing the method of according to the invention with the auxiliary open phase will bring a penalty in terms of engine efficiency, so that this method may only be desirable on specific instances. In most cases, the method will be desirable only where, at specific times, additional heat generation in the engine would be desirable, for example at engine cold-starting or when it is desired to regenerate a particulate filter, or for accurately controlling operating conditions of after-treatment systems. Therefore, the invention will be preferable used in connection with an engine arrangement where the intake port control means are capable of controlling the corresponding intake ports with or without the routine of controlling the intake port to achieve an auxiliary open phase during the power stroke, depending on the instant engine operating conditions. Of course, if the engine is of a camless type, having for example electronically piloted electric or electro-hydraulic valve actuators, it will be easy for the skilled man in the art to develop a proper electronic control unit capable of controlling the ports with or without the routine. If the engine is equipped with cam driven valves, there are numerous known devices which can achieve at least two control laws for a same valve. Such devices are already implemented to selectively drive the exhaust valves according to at least two controls laws, depending on whether or not it is desired to provide one or several additional open phases of the exhaust port during the compression stroke for enhancing the engine braking. Examples of such devices are described in documents US-5.193.497 and US-5.890.469. The skilled man in the art can rely on the disclosure of these documents to devise a corresponding system for controlling the intake valves of an engine arrangement which is to be controlled according to the invention.

The method according to the invention will advantageously be performed in view of heating up the engine arrangement, especially at cold start. The method can also be performed in view of heating up an exhaust after-treatment system. Preferably, it will be performed at low engine loads.

## Claims

1. Method for operating an internal combustion engine having at least one cylinder in which a piston connected to a crankshaft is displaced between a top dead center position and a bottom dead center position, thereby defining in the cylinder a variable volume combustion chamber, said engine operating according to a four stokes cycle including an intake stroke, a compression stroke, a power stroke comprising a combustion process, and an exhaust stroke, wherein the engine comprises at least one controlled intake port and at least one controlled exhaust port to control communication of the combustion chamber respectively with an intake line and with an exhaust line, and wherein the intake port is controlled to achieve a main open phase mainly during the intake stroke and the exhaust port is controlled to achieve a main open phase mainly during the exhaust stroke, **characterized in that** said method includes the routine of controlling the intake port to achieve an auxiliary open phase during the power stroke comprising a combustion process, the auxiliary open phase starts and ends during the power stroke, wherein the auxiliary open phase starts between 30 and 70 degrees of crankshaft revolution after the top dead center position initiating the power stroke.

2. Method according to any preceding claim, **characterized in that** the auxiliary open phase ends between 50 and 120 degrees of crankshaft revolution after the top dead center position initiating the power stroke.

3. Method according to any preceding claim, **characterized in that** the auxiliary open phase lasts between 15 and 50 degrees of crankshaft revolution.

4. Method according to any preceding claim, **characterized in that** the engine is a compression ignition engine.

5. Method according to any preceding claim, **characterized in that** the intake port is controlled through an intake valve

6. Method according to any preceding claim, **characterized in that** the intake valve is controlled through a variable valve control system.

7. Method according to any preceding claim, **characterized in that** the routine of controlling the intake port to achieve an auxiliary open phase during the power stroke is performed in view of heating up the engine arrangement.

8. Method according to any preceding claim, **characterized in that** the routine of controlling the intake port to achieve an auxiliary open phase during the power stroke is performed in view of heating the engine at cold start.

9. Method according to any preceding claim, **characterized in that** the routine of controlling the intake port to achieve an auxiliary open phase during the power stroke is performed in view of heating up an exhaust after-treatment system.

10. Method according to any preceding claim, **characterized in that** the routine of controlling the intake port to achieve an auxiliary open phase during the power stroke is performed at low engine loads.

11. Method according to any preceding claim, **characterized in that** the engine is a multi-cylinder engine, **in that** the intake line comprise an intake manifold having at least one distinct intake duct per cylinder so that, during the routine of controlling the intake port to achieve an auxiliary open phase during the power stroke for one cylinder, post combustion gases are expelled through the intake port into the corresponding intake duct of said cylinder.

## Patentansprüche

1. Verfahren für den Betrieb eines Verbrennungsmotors mit wenigstens einem Zylinder, in dem ein mit einer Kurbelwelle verbundener Kolben zwischen einem oberen Totpunkt und einem unteren Totpunkt verschoben wird, wodurch in dem Zylinder eine Brennkammer mit variablem Volumen gebildet wird, wobei der Motor in einem Viertaktzyklus arbeitet, einschließlich eines Ansaugtakts, eines Verdichtungstakts, eines Arbeitstakts, der einen Verbrennungsvorgang umfasst, und eines Ausstoßtakts, wobei der Motor wenigstens eine gesteuerte Ansaugöffnung und wenigstens eine gesteuerte Abgasöffnung umfasst, um die Kommunikation der Brennkammer mit einer Ansaugleitung bzw. einer Abgasleitung zu steuern, und wobei die Ansaugöffnung so gesteuert wird, dass sie eine Haupt-Öffnungsphase hauptsächlich während des Ansaugtakts erreicht, und die Abgasöffnung so gesteuert wird, dass sie eine Haupt-Öffnungsphase hauptsächlich während des Ausstoßtakts erreicht, **dadurch gekennzeichnet, dass** das Verfahren den Vorgang umfasst, die Ansaugöffnung so zu steuern, dass eine Hilfs-Öffnungsphase während des Arbeitstakts, der einen Verbrennungsvorgang umfasst, erreicht wird,
die Hilfs-Öffnungsphase während des Arbeitstakts beginnt und endet, wobei die Hilfs-Öffnungsphase zwischen 30 und 70 Grad der Kurbelwellendrehung nach dem oberen Totpunkt beginnt, der den Arbeitstakt einleitet.

2. Verfahren nach einem vorherigen Anspruch, **dadurch gekennzeichnet, dass** die Hilfs-Öffnungsphase zwischen 50 und 120 Grad der Kurbelwellendrehung nach dem oberen Totpunkt endet, der den Arbeitstakt einleitet.

3. Verfahren nach einem der vorigen Ansprüche, **dadurch gekennzeichnet, dass** die Hilfs-Öffnungsphase zwischen 15 und 50 Grad der Kurbelwellendrehung andauert.

4. Verfahren nach einem der vorigen Ansprüche, **dadurch gekennzeichnet, dass** der Motor ein Kompressionszündungsmotor ist.

5. Verfahren nach einem der vorigen Ansprüche, **dadurch gekennzeichnet, dass** die Ansaugöffnung durch ein Einlassventil gesteuert wird.

6. Verfahren nach einem der vorigen Ansprüche, **dadurch gekennzeichnet, dass** das Einlassventil durch ein variables Ventilsteuerungssystem gesteuert wird.

7. Verfahren nach einem der vorigen Ansprüche, **dadurch gekennzeichnet, dass** der Steuerungsvorgang der Ansaugöffnung zur Erzielung einer Hilfs-Öffnungsphase während des Arbeitstakts im Hinblick auf eine Erwärmung der Motoranordnung durchgeführt wird.

8. Verfahren nach einem der vorigen Ansprüche, **dadurch gekennzeichnet, dass** der Steuerungsvorgang der Ansaugöffnung zur Erzielung einer Hilfs-Öffnungsphase während des Arbeitstakts im Hinblick auf eine Erwärmung des Motors bei einem Kaltstart durchgeführt wird.

9. Verfahren nach einem der vorigen Ansprüche, **dadurch gekennzeichnet, dass** der Steuerungsvorgang der Ansaugöffnung zur Erzielung einer Hilfs-Öffnungsphase während des Arbeitstakts im Hinblick auf eine Erwärmung eines Abgasnachbehandlungssystems durchgeführt wird

10. Verfahren nach einem der vorigen Ansprüche, **dadurch gekennzeichnet, dass** der Steuerungsvorgang der Ansaugöffnung zur Erzielung einer Hilfs-Öffnungsphase während des Arbeitstakts bei niedrigen Motorlasten durchgeführt wird.

11. Verfahren nach einem der vorigen Ansprüche, **dadurch gekennzeichnet, dass** der Motor ein Mehrzylindermotor ist, dass die Ansaugleitung ein Ansaugrohr aufweist, das wenigstens einen getrennten Ansaugkanal pro Zylinder aufweist, so dass während des Steuerungsvorgangs der Ansaugöffnung zur Erzielung einer Hilfs-Öffnungsphase während des Arbeitstakts für einen Zylinder Nachverbrennungsgase durch die Ansaugöffnung in den entsprechenden Ansaugkanal des Zylinders entlassen werden.

## Revendications

1. Procédé pour faire fonctionner un moteur à combustion interne comportant au moins un cylindre dans lequel un piston raccordé à un vilebrequin se déplace entre une positions de point mort haut et une position de point mort bas, définissant de ce fait dans le cylindre une chambre de combustion de volume variable, ledit moteur fonctionnant selon un cycle à quatre temps, comprenant une course d'admission, une course de compression, une course de détente, comprenant un processus de combustion, et une course d'échappement, dans lequel le moteur comprend au moins un orifice d'admission commandé et au moins un orifice d'échappement commande pour commander la communication de la chambre de combustion avec, respectivement, une conduite d'admission et avec une conduite d'échappement, et dans lequel l'orifice d'admission est commandé pour réaliser une phase principale d'ouverture principalement pendant la course d'admission et l'orifice d'échappement est commandé pour réaliser une phase principale d'ouverture principalement pendant la course d'échappement,
**caractérisé en ce que** ledit procédé comprend la séquence consistant à commander l'orifice d'admission pour réaliser une phase auxiliaire d'ouverture pendant la course de détente comprenant un processus de combustion, la phase auxiliaire d'ouverture commençant et finissant pendant la course de détente,
dans lequel la phase auxiliaire d'ouverture commence entre 30 et 70 degrés de rotation du vilebrequin après la position de point mort haut amorçant la course de détente.

2. Procédé selon la revendication précédente, **caractérisé en ce que** la phase auxiliaire d'ouverture se termine entre 50 et 120 degrés de rotation du vilebrequin après la position de point mort haut amorçant la course de détente.

3. Procédé selon l'une quelconque des revendications précédentes, **caractérisé en ce que** la phase auxiliaire d'ouverture dure entre 15 et 50 degrés de rotation du vilebrequin.

4. Procédé selon l'une quelconque des revendications précédentes, **caractérisé en ce que** le moteur est un moteur à allumage par compression.

5. Procédé selon l'une quelconque des revendications précédentes, **caractérisé en ce que** l'orifice d'admission est commandé par une soupape d'admission.

6. Procédé selon l'une quelconque des revendications précédentes, **caractérisé en ce que** la soupape d'admission est commandée par un système de commande de soupape à programme variable.

7. Procédé selon l'une quelconque des revendications précédentes, **caractérisé en ce que** la séquence consistant à commander l'orifice d'admission pour réaliser une phase auxiliaire d'ouverture pendant la course de détente est effectuée en vue de réchauffer l'agencement de moteur.

8. Procédé selon l'une quelconque des revendications précédentes, **caractérisé en ce que** la séquence consistant à commander l'orifice d'admission pour réaliser une phase auxiliaire d'ouverture pendant la course de détente est effectuée en vue de chauffer le moteur lors d'un démarrage à froid.

9. Procédé selon l'une quelconque des revendications précédentes, **caractérisé en ce que** la séquence consistant à commander l'orifice d'admission pour réaliser une phase auxiliaire d'ouverture pendant la course de détente est effectuée en vue de réchauffer un système de post-traitement des gaz d'échappement.

10. Procédé selon l'une quelconque des revendications précédents , **caractérisé en ce que** la séquence consistant à commander l'orifice d'admission pour réaliser une phase auxiliaire d'ouverture pendant la course de détente est effectuée quand la charge du moteur est faible.

11. Procédé selon l'une quelconque des revendications précédentes, **caractérisé en ce que** le moteur est un moteur multicylindre, **en ce que** la ligne d'admission comprend un collecteur d'admission comportant au moins un conduit d'admission distinct par cylindre de sorte que, pendant la séquence consistant à commander l'orifice d'admission pour réaliser une phase auxiliaire d'ouverture pendant la course de détente pour un cylindre, les gaz de postcombustion sont expulsés par L'orifice d'admission dans le conduit d'admission correspondant du cylindre.
